# EUROPÄISCHE PATENTANMELDUNG

(11) **EP 0 940 616 A2**
(43) Veröffentlichungstag der Anmeldung: **08.09.1999**
(21) Anmeldenummer: 99103146.9
(22) Anmeldetag: 18.02.1999
(51) Int. Cl.: F16L 19/08

(54) **Steckkupplung**

(30) Priorität: 05.03.1998 DE 19809290
(71) Anmelder: Friatec Aktiengesellschaft, 68229 Mannheim (DE)
(72) Erfinder: Maier, Fabian, 67354 Rönerberg (DE); Lehr, Harald, 68549 Ilvesheim (DE); Müller, Gerhard, 68229 Mannheim (DE)
(74) Vertreter: Schmitt, Meinrad, Dipl.-Ing.

(57) **Zusammenfassung**

Eine Steckkupplung enthält ein Muffenkörper (2), eine Haube (4, 5) und eine Halteeinrichtung für ein einschiebbares Rohrende, wobei der Muffenkörper (2) und die Haube (4, 5) miteinander korrespondierende Gewindesegmente (8, 9) aufweisen, welche in Umfangsrichtung durch Zwischenräume (10) beabstandet sind. Diese Steckkupplung soll dahingehend weitergebildet werden, daß bei schneller Verbindbarkeit von Haube und Muffenkörper ein unbeabsichtigtes Lösen der Haube mit hoher Sicherheit verhindert wird. Es wird ein Sperrelement (12, 13) vorgeschlagen, welches bezüglich des Muffenkörpers (2) und/oder der Haube (4, 5) derart bewegbar ist, daß es in der festgeschraubten Position der Haube (4, 5) in die sich überlappenden Zwischenräume (10) von Muffenkörper (2) und Haube (4, 5) bewegbar ist und diese gegen ein Aufdrehen sichert.

## Beschreibung

Die Erfindung bezieht sich auf eine Steckkupplung gemäß den im Oberbegriff des Patentanspruchs 1 angegebenen Merkmalen.

Aus der europäischen Patentanmeldung gemäß EP 816 741 A2 ist eine derartige Steckkupplung bekannt, welche eine Halteeinrichtung zur Verbindung eines Rohrendes mit einem Muffenkörper enthält. Es ist eine mit dem Muffenkörper mittels eines Gewindes verbindbare Kappe oder Haube vorgesehen, welche mit der Halteeinrichtung derart zusammenwirkt, daß durch Klemmung eine feste Verbindung des Rohrendes erreicht wird. Um eine schnelle Verbindung der Kappe mit dem Muffenkörper zu erhalten, sind die miteinander korrespondierenden Gewindegänge nicht über den vollen Umfang geführt, sondern in Umfangsrichtung in Segmente und gewindefreie Zwischenräume unterteilt. Zur Herstellung der Verbindung werden zunächst die Gewindesegmente der Haube in die Zwischenräume des Muffenkörpers und umgekehrt axial ineinandergeschoben und nachfolgend wird durch gegenseitige Drehung um einen Winkelbereich wesentlich kleiner 180° die Gewindeverbindung hergestellt. Bei Verlegung von Rohren, welche als Rollenware bereitgestellt werden, können recht hohe Drehmomente zwischen der Halteeinrichtung, insbesondere deren Klemmring, und der genannten Haube infolge von Hebelwirkung und Torsion auftreten. Das Drehmoment kann das Lösen der Haube bewirken. Je nach Form und Geometrie des Muffenkörpers, der als gerader Körper ebenso wie als Winkelkörper, beispielsweise in 45° oder 90° Anordnung, wirkt sich ein äußeres Drehmoment unterschiedlich stark auf das mögliche Öffnungsverhalten der Haube aus.

Hiervon ausgehend liegt der Erfindung die Aufgabe zugrunde, die Steckkupplung der genannten Art dahingehend weiterzubilden, daß bei schneller Verbindbarkeit ein unbeabsichtigtes Lösen der Haube vom Muffenkörper mit hoher Sicherheit verhindert wird. Die Steckkupplung soll einen robusten funktionssicheren Aufbau aufweisen und eine dauerhafte und sichere Fixierung der Haube auf dem Muffenkörper und letztendlich eine dauerhafte Verbindung und Halterung des Rohrendes gewährleisten. Die Verbindung soll bei Bedarf problemlos wieder lösbar sein.

Die Lösung dieser Aufgabe erfolgt gemäß den im Patentanspruch 1 angegebenen Merkmalen.

Die vorgeschlagene Steckkupplung zeichnet sich durch eine stabile, funktionsgerechte Konstruktion aus und gewährleistet dauerhaft eine sichere Verbindung mit dem eingeschobenen Rohrende, wobei ein unerwünschtes Aufdrehen der Haube mittels eines Sperrelements verhindert wird. Das Sperrelement greift nach dem Aufschrauben der Haube auf den Muffenkörper in die zwei sich überlappende Zwischenräume zwischen den jeweiligen Gewindesegmenten von Muffenkörper und Haube. Mittels der integrierten Halteeinrichtung wird, insbesondere über deren von der Haube axial und / oder radial beaufschlagten Klemmring, permanent und ohne negative Veränderungen die Haltekraft des Rohrendes gewährleistet. Das Sperrelement bewirkt eine Rotationssicherung dadurch, daß die insbesondere in axialen Ebenen verlaufenden Flanken der Gewindesegmente zur Anlage an das Sperrelement gelangen, wodurch eine gegenseitige Drehung von Haube und Muffenkörper und ein Nachlassen der Haltekräfte oder der Klemmwirkung bezüglich des Rohrendes unterbunden ist. Die erfindungsgemäße Verriegelung der Haube bezüglich des Muffenkörpers verhindert in allen Nennweiten und Grundkörperausführungen mit hoher Funktionssicherheit ein Lösen der Haube unter Einwirkung von äußeren Kräften. Das Sperrelement ist in besonders zweckmäßiger Weise unverlierbar auf dem Muffenkörper oder in der Haube angeordnet und ist derart bewegbar, daß es zur Verriegelung in die Zwischenräume der Gewindesegmente gelangt und eine formschlüssige Verbindung realisiert. Das Sperrelement stützt sich mit seitlichen Flanken an den Gewindesegmenten des Muffenkörpers und der Haube ab, und blockiert somit den freien Raum zwischen den Gewindesegmenten. Aufgrund des in den Zwischenraum eingeschobenen Sperrelements können somit die Gewindesegmente der Haube nicht in den Freiraum des Muffenkörpers gedreht werden. Jederzeit kann erfindungsgemäß durch Herausziehen des Sperrelements die Gewindeverbindung gelöst und das Rohrende aus der Steckkupplung wieder herausgezogen werden.

Das Sperrelement ist bevorzugt als ein axial verschiebbarer Riegel ausgebildet, welcher zumindest teilweise in die sich überlagernde Zwischenräume von Muffenkörper und Haube zwischen in Umfangsrichtung benachbarten Gewindesegmenten einschiebbar ist. In besonders zweckmäßiger Weise ist das Sperrelement unverlierbar entweder im Muffenkörper oder in der Haube bewegbar, insbesondere axial bewegbar, angeordnet und besitzt Anschläge, welche ein unerwünschtes Herauslösen oder Herausfallen unterbinden. Für das Sperrelement ist eine Führung vorgesehen, in welche jenes bei der Fertigung werksseitig eingesetzt wird, und zwar insbesondere nach Art einer Schnappverbindung unter Berücksichtigung der Federelastizität des Kunststoffs des Muffenkörpers oder der Haube. Nach Überwinden eines vorgebbaren Einsetzwiderstandes ist das Sperrelement in der Führung verankert und derart festgelegt, daß die bevorzugt axiale Bewegbarkeit zum gegenseitigen Verriegeln von Haube und Muffenkörper gewährleistet ist.

Besondere Ausgestaltungen und Weiterbildungen der Erfindung werden nachfolgend beschrieben und sind in den Unteransprüchen angegeben.

Die Erfindung wird nachfolgend anhand des in der Zeichnung dargestellten besonderen Ausführungsbeispiels näher erläutert. Es zeigen:
- Fig. 1: eine perspektivische Darstellung der Steckkupplung, welche als Doppelmuffe ausgebildet ist,
- Fig. 2: vergrößert den mittleren Bereich der Einsteckkupplung,
- Fig. 3: eine Ansicht eines Teils des Muffenkörpers ohne Haube.

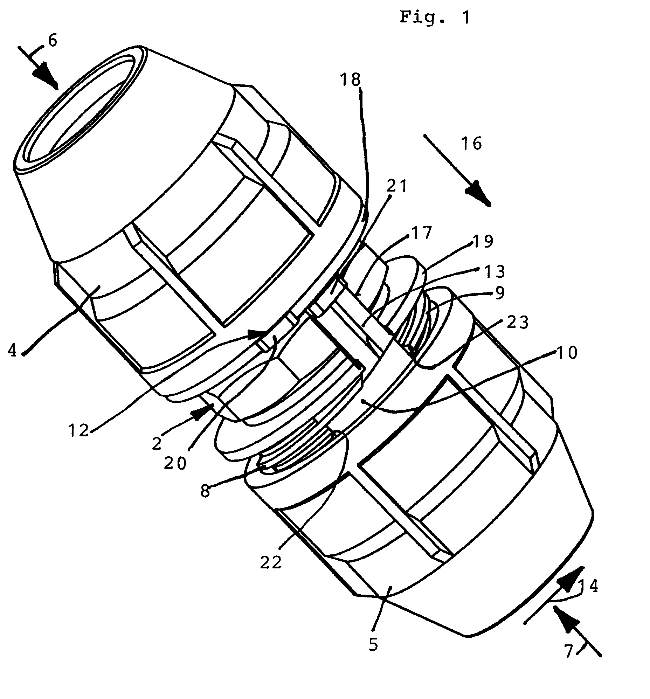

Fig. 1 zeigt eine perspektivische Darstellung der Steckkupplung, welche als Doppelmuffe ausgebildet ist und einen Grundkörper oder Muffenkörper 2 und zwei mit diesem über eine Gewindeverbindung verbundene bzw. fest verbindbare Hauben 4, 5 aufweist. In die Steckmuffe sind zwei Rohrenden jeweils in Richtung der Pfeile 6, 7 einsteckbar und werden mittels hier nicht weiter darzustellender Halteeinrichtungen mittels Klemmringen insbesondere durch Einklemmen im Zusammenwirken mit den Hauben 4, 5 dicht und dauerhaft über die Doppelsteckmuffe miteinander verbunden. Der Muffenkörper ist im Inneren hohl ausgebildet, so daß durch die derart miteinander verbundenen Rohrenden bedarfsweise ein Medium strömen kann oder Leitungen, Kabel oder dergleichen durchgeführt werden können.

Die eine, gemäß Zeichnung linke Haube 4 ist in der gesicherten Position bezüglich des Muffenkörpers 2 dargestellt, in welcher Position eine feste und drehsichere Verbindung der Haube 4 mit dem Muffenkörper 2 und ferner die dauerhafte Halterung des eingeschobenen Rohrendes gewährleistet ist. Hingegen ist die Haube 5 in einer Montageposition dargestellt, in welcher nach dem Einschieben des Rohrendes in Richtung des Pfeiles 7 eine vollständige Verbindung noch nicht hergestellt ist. Der Muffenkörper 2 besitzt nachfolgend noch näher zu erläuternde Gewindesegmente 8, 9, über welche die Verbindung mit der Haube 5 hergestellt werden kann, und ferner zwischen den Gewindesegmenten einen gewindefreien Zwischenraum 10. Die vollständig aufgeschraubte erste Haube 4 ist mittels eines Sperrelements 12 über eine formschlüssige Verbindung gesichert, wobei das bevorzugt als axial verstellbarer Riegel ausgebildete Sperrelement 12 in der endgültigen Arretierposition dargestellt ist. Hingegen ist das Sperrelement 13, welches gleichfalls als ein bevorzugt axial verschiebbarer Riegel ausgebildet ist, in der nicht arretierten Position dargestellt.

Die Haube 5 ist in einer Montageposition dargestellt, und zwar nach dem axialen Aufschieben auf den Muffenkörper 2 in Richtung des Pfeiles 7. Zur Herstellung der Gewindeverbindung zwischen der Haube 5 und dem Muffenkörper 2 ist noch eine Dreh- bzw. Aufschraubbewegung gemaß Pfeil 14 durchzuführen. Hierbei gelangen die in der Innenseite der Haube 5, entsprechendes gilt natürlich auch für die Haube 4, vorhandenen Gewindesegmente mit den Gewindesegmenten 8,9 des Muffenkörpers 2 in Eingriff, bis bei Erreichen der vorgegebenen Endposition eine feste Verbindung der Haube mit dem Muffenkörper und folglich des eingeschobenen Rohrendes mit dem Muffenkörper erreicht ist. Nach Erreichen der Dreh-Endposition der Haube 5 ist das Sperrelement 13 in Richtung des Pfeiles 16 in den gewindefreien Zwischenraum zwischen den in Umfangsrichtung benachbarten Segmenten 8, 9 des Muffenkörpers und ebenso den überlappenden korrespondierenden Zwischenraum zwischen den in der Innenfläche der Haube 5 vorgesehenen korrespondierenden Gewindesegmenten einschiebbar. Das insbesondere als axial verschiebbarer Riegel ausgebildete Sperrelement 13 blockiert in dieser Sicherungsposition die Haube 5 gegen ein Aufdrehen entgegen der mit dem Pfeil 14 angedeuteten Aufschraubrichtung. Wirken auf die Haube Kräfte oder Drehmomente entgegen der Aufschraubrichtung 14, so gelangen die seitlichen Flanken, welche bevorzugt in Axialebenen liegen, der Gewindesegmente der Haube 5 zur Anlage an die insbesondere achsparallele Seitenfläche 17 des Sperrelements 13 im Muffenkörper, so daß die Haube 5 hinsichtlich einer Aufdrehbewegung gesichert ist.

Durch die Erläuterung einer Steckkupplung mit Doppelmuffe erfolgt insoweit keine Beschränkung. Die Erfindung ist gleichermaßen in einer Steckmuffe mit nur einer einzigen Haube realisierbar, wobei die Steckkupplung Bestandteil einer Armatur, eines Fittings oder dergleichen sein kann. Ferner kann im Rahmen der Erfindung die Steckkupplung bzw. der Muffenkörper als Winkelstück angeordnet sein, so daß die Hauben in einem vorgegebenen Winkel von beispielsweise 45° oder 90° zueinander stehen. Maßgeblich ist für die jeweilige Ausführungsform die Arretierung der Haube mittels des Sperrelements 12 bzw. 13.

Wie bereits erläutert, befindet sich das Sperrelement 12 der ersten Haube 4 in der Arretier-Sicherungsposition. Hierbei befindet sich ein Ansatz 20, welcher in zweckmäßiger Weise radial vorsteht, im wesentlichen in der gleichen Radialebene wie ein Flansch 18 des Muffenkörpers 2. Die Haube 4 liegt nach dem vollständigen Aufschrauben mit einer axialen Stirnfläche zumindest näherungsweise an dem Flansch 18 an. Da der Ansatz 20 des Sperrelements 12 in der Sicherungsposition sich im Bereich des Flansches 18 befindet, ist damit in besonders zweckmäßiger Weise eine optische Kontrolle für die ordnungsgemäße Arretierung der Haube 4 geschaffen. Dies wird besonders deutlich im Vergleich der dargestellten Position des anderen Sperrelements 13 derart, daß das Aufschrauben der Haube 5 möglich ist. Für einen Benutzer ist somit unmittelbar angezeigt, ob das jeweilige Sperrelement 12 bzw. 13 in der Sicherungsposition oder in der Freigabeposition steht, in welcher das Sperrelement aus den Zwischenräumen zwischen den Gewindesegmenten herausgezogen ist. In der Sicherungsposition befinden sich die radial nach außen vorstehenden Ansätze 20, 21 der Sperrelemente 12, 13 jeweils im Bereich der gegenüberliegenden Flansche 18, 19. In der Freigabeposition ist also das Sperrelement für einen Benutzer gut wahrnehmbar, so daß er nach dem Herstellen der Verbindung mit dem oder den Rohrenden das Einschieben des Sperrelements und somit das Arretieren der jeweiligen Haube nicht vergißt oder ggf. auch noch bei einer Kontrolle nachträglich durchführen kann.

In der Zeichnung sind zwei Gewindesegmente 8, 9 zu erkennen und dazwischen der gewindefreie Zwischenraum 10. Über den gesamten Umfang des Muffenkörpers 2 verteilt sind in besonders zweckmäßiger Weise drei derartige Gewindesegmente und gleichfalls drei gewindefreie Zwischenräume vorgesehen. Korrespondierend sind in der Innenfläche der Haube 5 und gleichermaßen in der übereinstimmend ausgebildeten Haube 4 drei Gewindesegmente und drei Zwischenräume über den Umfang gleichmäßig verteilt vorgesehen. Es bedarf keiner besonderen Hervorhebung, daß die Gewindesegmente des Muffenkörpers 2 und der Haube 5 in der Weise aufeinander abgestimmt sind, daß nach dem Aufschieben der Haube 5 in Richtung des Pfeiles 7 und nachfolgendem Drehen die Gewindesegmente der Haube in die korrespondierenden Gewindesegmente des Muffenkörpers eingreifen, wobei entsprechend der Gewindesteigung eine axiale Bewegung der Haube in Richtung des Pfeiles 7 erfolgt. Infolge der axialen Bewegung wird mittels der im Inneren der Haube 5 und / oder des Muffenkörpers 2 angeordneten Halteeinrichtung das eingeschobene Rohrende in der erforderlichen Weise verpresst und festgeklemmt.

In zweckmäßiger Weise sind die über den Außenumfang des Muffenkörpers 2 gleichmäßig verteilten Gewindesegmente 8, 9 übereinstimmend ausgebildet und ebenso die in der Innenfläche der Haube 5 vorgesehenen Gewindesegmente. Die Gewindesegmente enden in zweckmäßiger Weise bevorzugt jeweils in Axialebenen und anschließend erstrecken sich die gewindefreien Zwischenräume 10 mit im wesentlichen zylindrischer Außenfläche bis zum nächsten Gewindesegment, welches bevorzugt wiederum in einer Axialebene beginnt und so fort. Die Zwischenräume 10 des Muffenkörpers 2 erstrecken sich über einen Umfangswinkel, welcher zumindest gleich, bevorzugt um einen vorgegebenen, kleinen Betrag größer ist als der Umfangswinkelbereich des Gewindesegments der Haube 5. Somit können beim Aufschieben der Haube 5 deren Gewindesegmente in die zugeordneten Zwischenräume des Muffenkörpers axial eingeschoben werden und nach dem vollständigen Aufschieben kann die bereits erwähnte Drehung zum Festziehen durchgeführt werden. In der erläuterten Ausführungsform mit drei Gewindesegmenten und gleichfalls drei gewindefreien Zwischenräumen erstrecken sich die drei Gewindesegmente über Winkelbereiche von jeweils näherungsweise 30°, während die Zwischenräume gleich oder größer 30° jeweils ausgebildet sind, so daß auch unter Berücksichtigung von Fertigungstoleranzen ein hinreichendes seitliches Spiel in Umfangsrichtung an den Endflanken 22, 23 der einzelnen Gewindezähne der verschiedenen Segmente vorhanden ist.

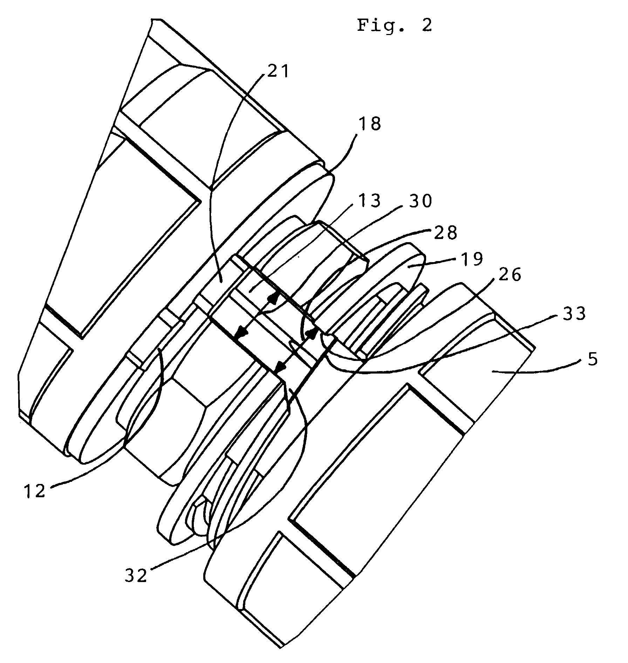

Fig. 2 zeigt vergrößert den mittleren Teil der Steckkupplung mit den axial beabstandet angeordneten Flanschen 18, 19, wobei das erste Sperrelement 12 sich wiederum in der eingeschobenen Sicherungsposition befindet, während das zweite Sperrelement 13 in der Freigabeposition vor dem vollständigen Aufschrauben der Haube 5 dargestellt ist. Wie ersichtlich, weist der Flansch 19 eine Ausnehmung 26 zur Aufnahme des Sperrelements 13 auf. Die Ausnehmung 26 weist zweckmäßig im radial außenliegenden Bereich eine um einen vorgegebenen Betrag geringere Breite 28 auf als die Breite 30 des Sperrelements oder Riegels 13. Der Muffenkörper und / oder der Riegel bestehen in zweckmäßiger Weise aus Kunststoff und/oder einen Werkstoff mit einer vorgegebenen Federelastizität. Somit kann das Sperrelement bzw. der Riegel 13 bei Überwindung einer vorgebbaren Kraft in die Ausnehmung 26 eingepreßt werden, um nachfolgend in der Ausnehmung 26 gesichert zu sein. Ein Herauslösen des Sperrelements aus der Ausnehmung 26 ist somit verhindert. Erfindungsgemäß ist das Sperrelement 13 unverlierbar im Muffenkörper 2 angeordnet. Des weiteren besitzt das Sperrelement 13 an seinem, dem radial nach außen vorstehenden Ansatz 21 abgewandten Ende wenigstens eine Erweiterung oder einen in Umfangsrichtung sich erstreckenden Anschlag 32. Wie ersichtlich, erstreckt sich der Anschlag 32 über die Breite 30 in Umfangsrichtung hinaus. Ein weiterer Anschlag 33 ist auf der der Umfangsrichtung gegenüberliegenden Seite des Sperrelements 13 vorgesehen. Durch den wenigstens einen, zweckmäßig durch beide Anschläge 32, 33 wird ein unerwünschstes Herauslösen und Herausziehen des Sperrelements oder Riegels 13 vom Muffenkörper 2 funktionssicher unterbunden.

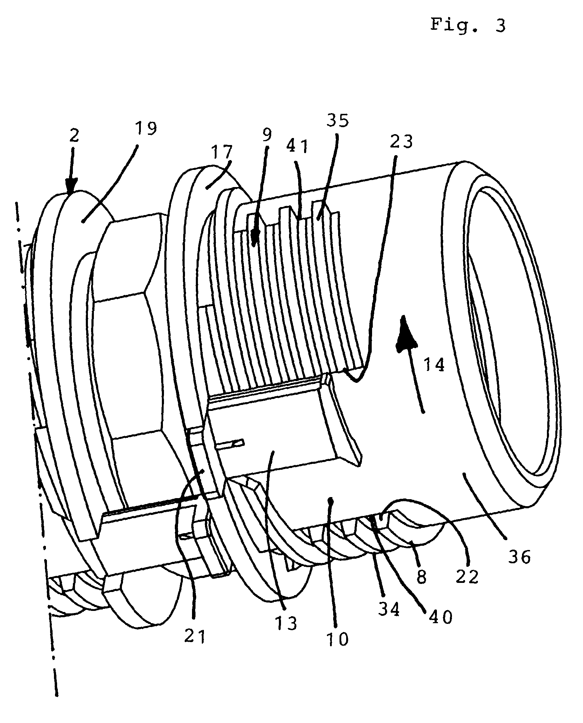

Fig. 3 zeigt teilweise den Muffenkörper 2 ohne die Hauben, wobei die beiden Gewindesegmente 8, 9 und der gewindefreie Zwischenraum 10 gut zu erkennen sind. Das Sperrelement bzw. der Riegel 13 ist in der Sperrposition dargestellt, wobei der radiale Ansatz 21 sich im Bereich der gleichen Radialebene wie der Flansch 19 befindet. Wie ersichtlich, liegen die Endflanken 22, 23 der beiden Gewindesegmente 8, 9 jeweils in den gleichen Axialebenen, und dazwischen erstreckt sich der gewindefreie Zwischenraum 10, welcher durch die im wesentlichen zylindrische Außenfläche des Muffenkörpers 2 gebildet ist. Die einzelnen Gewindeteile 34, 35 der Gewindessegmente 8, 9 stehen in vorgegebener Höhe über die zylindrische Außenfläche 36 des Muffenkörpers 2 vor. Die Bodenflächen 38 zwischen den einzelnen Gewindeteilen 34, 35 liegen auf dem gleichen Radius wie die Außenfläche 36, bzw. stellen eine Verlängerung derselben in den Bereich der Gewindesegmente dar. Ferner sind in Aufschraubrichtung 14 am Ende des Gewindesegments 9 Endkörper 40, 41 zwischen den axial beabstandeten Gewindeteilen 34, 35 vorgesehen. Diese Endkörper 40, 41 bilden Anschläge zur Begrenzung der Aufschraubbewegung der Haube. Nach dem Aufschrauben der Haube liegen die über die zylindrische Innenfläche der Haube entsprechend radial nach innen vorstehenden Gewindeteile der dortigen Gewindesegmente an den Endkörpern 40, 41 des Muffenkörpers an, so daß die Aufschraubbewegung begrenzt ist. Damit ist eine definierte Ausrichtung und letztendlich eine definierte axiale und / oder radiale Verspannung der Halteeinrichtung bezüglich des eingeschobenen Rohrendes sichergestellt.

### Bezugszeichen

- 2: Muffenkörper
- 4, 5: Haube
- 6, 7: Pfeil
- 8, 9: Gewindesegment
- 10: Zwischenraum
- 12, 13: Sperrelement / Riegel
- 14, 16: Pfeil
- 17: Seitenfläche von 13
- 18, 19: Flansch
- 20, 21: radialer Ansatz von 12, 13
- 22, 23: Endflanke
- 26: Ausnehmung in 19
- 28: Breite von 26
- 30: Breite von 13
- 32, 33: Erweiterung / Anschlag
- 34, 35: Gewindeteile
- 36: Außenfläche von 2
- 38: Bodenfläche
- 40, 41: Endkörper in 8, 9

## Patentansprüche

1. Steckkupplung mit einem Muffenkörper (2), einer Haube (4, 5) und einer Halteeinrichtung für ein einschiebbares Rohrende, wobei der Muffenkörper und die Haube miteinander korrespondierende Gewindesegmente (8, 9) aufweisen, welche in Umfangsrichtung durch Zwischenräume (10) beabstandet angeordnet sind,
dadurch gekennzeichnet, daß ein Sperrelement (12, 13) vorgesehen ist, welches bezüglich des Muffenkörpers (2) und / oder der Haube (4, 5) derart bewegbar ist, daß es in der auf dem Muffenkörper (2) festgeschraubten Position (4, 5) der Haube in die sich überlappenden Zwischenräume (10) vom Muffenkörper (2) und Haube (4, 5) bewegbar ist und die Haube (4, 5) gegen ein Aufdrehen sichert.

2. Steckkupplung nach Anspruch 1, dadurch gekennzeichnet, daß das Sperrelement (12, 13) als ein im wesentlichen axial, bevorzugt auf den Muffenkörper (2), verschiebbarer Riegel ausgebildet ist und / oder daß das Sperrelement (12, 13) unverlierbar bevorzugt auf dem Muffenkörper (2) angeordnet ist.

3. Steckkupplung nach Anspruch 1 oder 2, dadurch gekennzeichnet, daß das Sperrelement (12, 13) in einer Ausnehmung (26) des Muffenkörpers (2) angeordnet ist und / oder in die Ausnehmung (26) unter Überwindung einer vorgebbaren Kraft einsetzbar und nachfolgend in dieser unverlierbar gehaltert ist.

4. Steckkupplung nach Anspruch 3, dadurch gekennzeichnet, daß die Ausnehmung am bevorzugt radial außen liegenden Rand eine Breite (28) aufweist, welche größer ist als die Breite (30) des Sperrelements (12, 13), welches im eingebauten Zustand in der Ausnehmung (26) vorzugsweise axial bewegbar ist.

5. Steckkupplung nach einem der Ansprüche 1 bis 4, dadurch gekennzeichnet, daß das Sperrelement (12, 13) eine Seitenfläche (17) aufweist, an welche in der Sicherungsposition des Sperrelements (12, 13) das zugeordnete Gewindesegment, bevorzugt der Haube (4, 5), zur Anlage gelangt.

6. Steckkupplung nach einem der Ansprüche 1 bis 5, dadurch gekennzeichnet, daß der gewindefreie Zwischenraum (10) durch eine im wesentlichen zylindrische Außenfläche des Muffenkörpers (2) vorgegeben ist und / oder daß der gewindefreie Zwischenraum (10) durch die im wesentlichen zylindrische Innenfläche der Haube (4, 5) vorgegeben ist, wobei die Gewindesegmente (8, 9) in vorgebbarer Höhe über die Außenfläche und / oder die Innenfläche in radialer Richtung vorstehen.

7. Steckkupplung nach einem der Ansprüche 1 bis 6, dadurch gekennzeichnet, daß das Sperrelement (12, 13) einen zumindest näherungsweise radialen Ansatz (20, 21) aufweist, welcher in der eingeschobenen Sicherungsposition im Bereich eines Flansches (18, 19) des Muffenkörpers (2) und / oder im Bereich einer axialen Stirnfläche der Haube (4, 5) angeordnet ist.

8. Steckkupplung nach einem der Ansprüche 1 bis 7, dadurch gekennzeichnet, daß das Sperrelement (12, 13) wenigstens eine sich in Umfangsrichtung erstreckende Erweiterung oder einen Anschlag (32, 33) aufweist, mittels welchem ein Herauslösen des Sperrelements (12, 13) aus dem Muffenkörper (2) oder der Haube (4, 5) verhindert wird.
